# EUROPEAN PATENT APPLICATION

(11) **EP 2 059 073 A1**
(43) Date of publication of application: **13.05.2009**
(21) Application number: 07291330.4
(22) Date of filing: 06.11.2007
(51) Int. Cl.: H04W 4/00

(54) **Method and apparatus for call handover in a telecommunications system**

(71) Applicant: Alcatel Lucent, 75008 Paris (FR)
(72) Inventor: Dupuy, Pierre, 75017 Paris (FR); Landais, Bruno, 22560 Pleumeur-Bodou (FR)
(74) Representative: Cockayne, Gillian

(57) **Abstract**

A method for call handover from a source cell associated with a first Base Transceiver Station, BTS, to a target cell associated with a second BTS in a telecommunications system in which the BTSs are directly connected to a Media Gateway, MGW, including the steps of: connecting the first BTS to a radio access termination, RAT, at the MGW; and connecting the second BTS to the same RAT as the first BTS. The method is particularly applicable to AoIP.

## Description

### FIELD OF THE INVENTION

The present invention relates to a method and apparatus for call handover in a telecommunications system.

### BACKGROUND OF THE INVENTION

The 3rd Generation Partnership Project ("3GPP"): Technical Specification Group GERAN, Release 8, is to introduce the transport of voice over IP on the A-interface ("AoIP"). The A-interface is the user plane between a Base Station System ("BSS") and a Media Gateway ("MGW"). It has been proposed that AoIP should use a protocol that is very similar to that of the Nb interface as defined in 3GPP specification TS 29.414 v7.2.0 (2007-03), incorporated herein by way of reference. The Nb interface is the interface used to transfer data, such as voice packets, between MGWs. From a user viewpoint, the AoIP interface between the BSS and the MGW will be almost Nb, that is, the BSS will behave as an MGW. Protocols for transmitting voice packets include Real time Transport Protocol ("RTP"), User Datagram Protocol ("UDP") or Internet Protocol ("IP"), together with Real Time Transport Control Protocol ("RTCP") for control purposes.

In a GSM system, internal, or intra, handover is where handover ("HO") is from one Base Transceiver Station ("BTS") to another BTS and both are controlled by the same Base Station Controller ("BSC"). The term also includes handover between different sectors at the same BSS. In an example of internal handover, a Mobile Station ("MS") is currently in communication with a source cell, associated with the source BTS and it is required to transfer it to a target cell associated with a target BTS, which is different from the source BTS in this case. A new channel is set up in a target cell to which the call is to be transferred. Optionally, a Y connection is set up in the BSC to multicast the speech towards both the source and target cells, so as to provide soft HO. An HO command is sent to the MS. When the MS accesses the target cell with the HO access (or when the MS starts sending speech in the target cell), the uplink data path is switched in the BSC to connect the target cell to the transcoder, which is included in the BSS. If HO fails, the BSC just re-establishes the speech path with the source cell, if it has been released, and releases the resources in the target cell.

The introduction of A user plane over IP introduces new network optimization opportunities where the transcoders are removed from the BSS. It then becomes technically feasible to connect the BTS user plane directly to the MGW, with the BSC acting only as a signalling server.

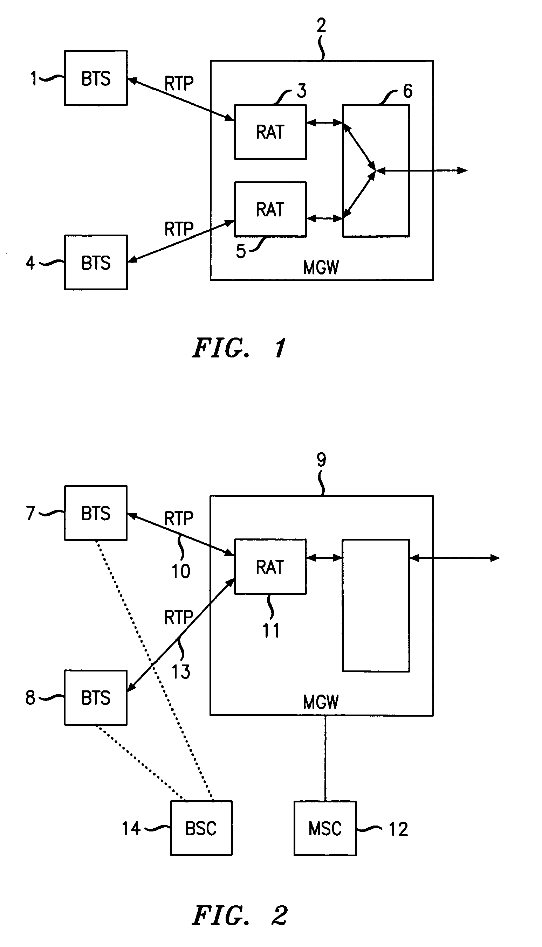

As illustrated in Figure 1, where AoIP is implemented there is a direct connection between the BTS 1 and the MGW 2 (when the transcoders are removed from the BSS) with the BTS 1 having a Radio Access Termination ("RAT") 3 at the MGW 2. Internal HO from the source BTS 1 to a target BTS 4 cannot be handled in the same manner as that set out above, because the two BTSs 1 and 4 involved in the HO cannot share the same IP termination point. Instead, to achieve HO, a new channel is set up in the target cell associated with BTS 4. A new RAT 5 is set up in the MGW 2. Optionally, a Y connection is set up in the MGW 2, as shown at 6 in Figure 1, with the source and target RATs 3 and 4, to multicast the speech towards the two cells. Then the HO command is sent to the MS. When the MS accesses the new cell, the BSC, sends a message to the Mobile Switching Center ("MSC") server, indicating that the MS has accessed the target cell. The MSC server switches the uplink path from the source RAT 3 to the target RAT 5.

Thus, AoIP intra HO is likely to incur similar delays as are experienced with inter, or external, HO, and hence a longer speech interruption time, due to the necessity to use signalling to switch the Radio Access Terminations. It will also require more transcoding resources than conventional internal BSC handover, and more MSC server processing, as all handovers are essentially external handovers.

### BRIEF SUMMARY OF THE INVENTION

According to a first aspect of the invention, a method for call handover from a source cell associated with a first Base Transceiver Station, BTS, to a target cell associated with a second BTS in a telecommunications system in which the BTSs are directly connected to a Media Gateway, MGW, or via a transmission network includes the steps of: connecting the first BTS to a radio access termination, RAT, at the MGW; and connecting the second BTS to the same RAT as the first BTS. Although it is likely in practice that one RAT connects to two voice processing points for handover purposes, there may be situations in which is connected to more than two, for example, where there are several candidate target cells for potential handover. The RAT may multicast the same voice flow towards the BTSs, either using the same codec, or a different codec for each BTS. If the two codecs are different and the RAT does not have sufficient resources to encode with two different codecs, it only sends one flow to a single BTS at a time.

In one method in accordance with the invention, signaling between the BTSs and the MGW uses Real time Transport Protocol, RTP. The telecommunications system may be in accordance with 3GPP A-interface over IP, AoIP, specifications. By using the invention, the advantages of AoIP can be realised without the attendant difficulties with HO as previously described. In the previous proposal described above, all BSS internal handovers effectively become equivalent to BSS external handovers as one Radio Access Termination is specified for each BTS. In contrast, use of the invention reduces resource usage, speech interruption time and reduces the MSC server load.

According to one method in accordance with the invention, voice information coming from the BTS can be switched on the basis of a real time decision taking into account the reception of at least one good voice packet coming from the BTS. The decision about which codec to use in the downlink direction can also be based on this criteria. Data from the BTS which has sent the last voice packet can be used to decide which uplink connection should be used for the uplink voice generation and which codec should be used for the downlink direction.

In another aspect of the present invention, the BTS effectively acts as the RAT, and there is 'local routing', where there is no separately provided RAT used to connect the BTS. This is termed transcoder free operation ("TRFO"), but in this case, the MGW is not kept in the data path, as in the previous TRFO specification. This 'local routing' direct BTS to BTS connection is particularly applicable to 3G/LTE and other future specifications.

According to another aspect of the invention, a telecommunications system operates in accordance with a method in accordance with first aspect the invention.

### BRIEF DESCRIPTION OF THE DRAWINGS

Some methods and embodiments in accordance with the present invention are now described by way of example only, and with reference to the accompanying drawings, in which:
Figure 1 schematically illustrates a previous proposal; and
Figure 2 schematically illustrates a system in accordance with the invention.

### DETAILED DESCRIPTION

With reference to Figure 2, handover is required from a first, source, cell associated with a first BTS 7 to a second, target, cell associated with a second BTS 8, BTS 7 and BTS 8 both being connected to the same MGW 9 and controlled by BSC 14. In the source cell, a connection 10 exists between the radio channel (IPb1, Pb1) and a Radio Access Point 11 in the MGW 9 (IPr1, Pr1). Then, a new channel is set up in the target cell associated with the second BTS 8. The BSC 14 indicates to the Mobile Switching Center ("MSC") 12 server that a handover is prepared, and includes information about the IP address and port of the target radio channel (IPb2,Pb2). The MSC 12 server configures the MGW 9 to indicate that the RAT 11 managing the connection with (IPb1, Pb1) must now also manage (IPb2,Pb2). At this stage, the RAT 11 manages two RTP connections: the first one 10 involving (IPr1,Pr1) with (IPb1, Pbl); and a second one 13 involving (IPr1,Pr1) with (IPb2, Pb2).

As an implementation choice, the RAT 11 can select from the following possibilities: generate the same voice flow towards the source and target cells if they use the same codec; generate two different voice flows when the two channels use different codecs; and generate only one voice flow if the two codecs are different.

To switch from the old channel to the new channel, the RAT 11 waits for the first valid speech block coming from the target cell. This valid speech block may be either a speech frame or a SID frame indicating that no speech is present. As soon as the RAT 11 receives the first valid speech block, it starts generating the speech flow corresponding to the target cell information. Optionally, the RAT 11 can continue to generate a speech flow towards the source cell, with the same alternatives as above. At this time, the RAT 11 is still able to switch back to the source codec, for example, if the source cell re-starts transmitting valid voice information, which may be voice or SID, as mentioned above. The handover process is terminated when the handover has been successfully accomplished or, in case of a handover failure, when information reporting the failure is received at the MSC 12 server from the BSC 14.

In an alternative to the arrangement shown in Figure 2, the RAT 11 is replaced by another BTS to provide TRFO, the replacement BTS acting in the same manner as the RAT described with reference to Figure 2.

The MGW/MSC may be arranged such that optionally it connects a single RAT to two BTS or it could connect as in the previously proposed method such that one RAT is connected to only a single BTS, depending on call set-up negotiations.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A method for call handover from a source cell associated with a first Base Transceiver Station, BTS, to a target cell associated with a second BTS in a telecommunications system in which the BTSs are directly connected to a Media Gateway, MGW, or via a transmission network including the steps of:
connecting the first BTS to a radio access termination, RAT, at the MGW; and
connecting the second BTS to the same RAT as the first BTS.

2. The method as claimed in claim 1 and including the steps of: the RAT multicasting the same voice flow towards the two BTS.

3. The method as claimed in claim 2 wherein the RAT multicasts either the same codec to each BTS or a different codec for each BTS.

4. The method as claimed in claim 1 and wherein the RAT transmits only one flow to a single BTS at a time if the codecs for the BTS are different and the RAT does not have sufficient resources to encode with two different codecs.

5. The method as claimed in claim 1 wherein signaling between the BTSs and the MGW uses Real time Transport Protocol, RTP.

6. The method as claimed in any preceding claim wherein the telecommunications system is in accordance with 3GPP A-interface over IP, AoIP, specifications.

7. The method as claimed in any preceding claim and including the step of switching the voice information coming from the BTS, on the basis of a real time decision based on the reception of at least one good voice packet coming from the BTS.

8. The method as claimed in claim 7 and including deciding which codec to use in the downlink direction, based on the reception of at least one good voice packet coming from the BTS.

9. The method as claimed in claim 7 or 8 an d including using data from the BTS which sent the last voice packet to decide which uplink connection should be used for the uplink voice generation and which codec should be used for the downlink direction.

10. The method as claimed in claim 1 and wherein, in transcoder free operation, TRFO, the RAT is provided by a BTS.

11. The method as claimed in claim 10 and wherein the telecommunications system is in accordance with 3G/LTE specifications.

12. A telecommunications system operating in accordance with a method as claimed in any preceding claim.
